# EUROPÄISCHE PATENTSCHRIFT

(11) **EP 1 617 544 B1**
(45) Veröffentlichungstag und Bekanntmachung des Hinweises auf die Patenterteilung: **06.10.2010**
(21) Anmeldenummer: 04291779.9
(22) Anmeldetag: 12.07.2004
(51) Int. Cl.: H02K 41/02, H01B 9/02, H02K 3/40

(54) **Linearmotor mit einer Wicklung**
Linear motor with a winding
Moteur linéaire avec un enroulement

(43) Veröffentlichungstag der Anmeldung: 18.01.2006
(73) Patentinhaber: Nexans, 75008 Paris (FR)
(72) Erfinder: Zamzow, Peter, 44795 Bochum (DE); Büthe, Harald, 41334 Nettetal (DE); Talian, Georg, 47441 Moers (DE)
(74) Vertreter: Döring, Roger

(56) Entgegenhaltungen:
- DE-A- 4 022 476
- DE-A- 19 638 603
- DE-A- 19 728 940
- GB-A- 966 574
- US-A- 4 684 762

## Beschreibung

Die Erfindung bezieht sich einen Linearmotor, gemäß dem Oberbegriff des Patentanspruchs 1 (DE 40 22 476 A1).

Linearmotoren sind für elektrische Antriebe unterschiedlicher Art seit langem bekannt. Es gibt dabei sowohl Gleichstrom- als auch Wechselstrom-Synchron- und Asynchronmotoren. Beim Linearmotor sind sowohl ein feststehender Stator als auch ein bewegbarer Läuferteil im Gegensatz zum konventionellen Motor nicht kreisförmig, sondern geradlinig angeordnet. Die elektrische Energie wird bei einem Linearmotor so in mechanische Energie umgesetzt, daß sie unmittelbar für eine Translationsbewegung nutzbar wird. Einsatzgebiete für einen Linearmotor sind beispielsweise der Personenverkehr, das Förder- und Transportwesen, Fließbänder, Gepäcktransport, Bergbau, Kräne, Schleppanlagen, Schlitten von Werkzeugmaschinen und die Betätigung von Schiebern. Der Linearmotor kann prinzipiell eine in Nuten eines Induktors angeordnete Erregerwicklung haben, die bei Wechselstrom dreiphasig ausgebildet ist. Der Läuferteil besteht dann entweder aus einer Schiene aus elektrisch gut leitendem Material, wie Kupfer oder Aluminium (Asynchronmotor), oder aus permanentnagnetischem Material (Synchronmotor).

Wenn ein derartiger Linearmotor beispielsweise zum Antrieb einer Magnetschwebebahn für den Fernschnellverkehr eingesetzt wird, dann ergibt sich für den Induktor und damit auch für die in seinen Nuten angebrachten Kabel eine sehr große Länge. Da ein solcher Linearmotor aus diesem Grund mit einer relativ hohen elektrischen Spannung betrieben wird, müssen die Kabel mit einer inneren und einer äußeren Leitschicht sowie einem Schirm ausgerüstet sein. Der Schirm derartiger, als Mittelspannungskabel ausgeführter Kabel ist für eine sichere Führung kapazitiver Ladeströme, eine Erdschlußerkennung, eine Möglichkeit zur Fehlerortung und als Schutz gegen mechanische Beschädigungen der den Leiter umgebenden Schichten erforderlich. Ferner soll er Lebewesen vor Gefährdung durch hohe elektrische Spannungen schützen.

Beim Einsatz von Mittelspannungskabeln mit dem beschriebenen Aufbau im sehr langen, aus Induktor und Kabeln bestehenden Stator eines Linearmotors wird auf den Schirmen der Kabel eine hohe Längespannung induziert, die beispielsweise bei einer Länge des Stators von 100 m weit mehr als 1 kV betragen kann. Damit derart hohe Spannungen nicht entstehen können, könnten die Schirme in sehr kurze Abschnitte aufgeteilt und jeder Abschnitt einseitig geerdet werden. Das ist umständlich und teuer und erhöht das Risiko von Kabelfehlern. Mit bekannten geschirmten Mittelspannungskabeln könnten kleine Schirmspannungen auch durch die Erdung der Schirme an beiden Enden eines Abschnitts fast beliebiger Länge oder durch Verbindung der Schirme der drei für die Wicklung verwendeten Kabel in fast beliebigen Abständen erzielt werden. Dann würden aber große Schirmströme fließen, die große Energieverluste verursachen und als Wirbelstrombremse wirken würden.

Aus der DE 196 38 603 A1 geht eine Wanderfeldleitung für Linearmotoren hervor, bei der zwischen einer die Isolierung des Leiters umgebenden äußeren Leitschicht und dem äußeren, elektrisch leitfähig gemachten Mantel eine sich über die ganze Länge der Leitung erstreckende, rundum geschlossene Metalleinlage als Zwischenschicht vorhanden, durch welche die elektrische Leitfähigkeit des Schirms der Leitung erhöht wird. Es soll dadurch erreicht werden, daß im Schirm induzierte elektrische Spannungen und Ströme, durch welche die Antriebsleistung eines mit solchen Leitungen ausgerüsteten Linearmotors vermindert werden könnte, möglichst niedrig gehalten werden. Außerdem sollen durch die Metalleinlage der Längswiderstand längs der Leitungsachse homogen sein und die Erfassung eines Erdschlusses sowie die Ableitung von Fehlerströmen mit reduziertem Aufwand in ausreichendem Maße sichergestellt werden. Das wird mit dieser bekannten Wanderfeldleitung in vielen Einsatzfällen auch erreicht. Trotzdem kann es geschehen, daß die Leitung insbesondere bei erhöhter Betriebsspannung beschädigt wird.

Die bekannte dreiphasige Wechselstrom-Wicklung für einen Linearmotor nach der eingangs erwähnten DE 40 22 476 A1 besteht aus elektrischen Kabeln, die einen Leiter, eine darüber liegende innere Leitschicht, eine dieselbe umgebende Isolierung, eine über derselben angeordnete äußere Leitschicht und einen Mantel aus elektrisch leitfähig gemachtem Isoliermaterial aufweisen. Zwischen äußerer Leitschicht und Mantel ist als Zwischenschicht ein zusätzlicher metallischer Schirm angeordnet, der auf der ganzen Länge des Kabels in axialen Abständen vollständig unterbrochen ist. Er besteht aus Streifen aus elektrisch gut leitendem Material, die mit Abstand zueinander um die äußere Leitschicht herumgelegt sind. Durch den zusätzlichen metallischen Schirm wird neben anderen Eigenschaften die Leitfähigkeit des aus äußerer Leitschicht und leitfähigem Mantel bestehenden Kabelschirms so weit erhöht, daß derselbe ausreichend hohe Ströme tragen kann, um eine einfache und schnelle Erkennung eines Erdschlusses sicherzustellen.

Der Erfindung liegt die Aufgabe zugrunde, den eingangs geschilderten Linearmotor so zu gestalten, daß er auf einfache Weise an unterschiedliche, für den Betrieb des Linearmotors geltende Betriebsspannungen anpaßbar ist, so daß eine Beschädigung seiner Wicklung durch zu hohe Betriebsspannungen ausgeschlossen werden kann.

Diese Aufgabe wird entsprechend den kennzeichnenden Merkmalen des Patentanspruchs 1 gelöst.

Der Widerstandswert des Vliesmaterials der Zwischenschicht wird bei dieser Wicklung jeweils so eingestellt, daß er für den jeweiligen Einsatzfall des Kabels ausreichend hoch ist. Er wird stets höher als der Widerstandswert des als Erdleiter eingesetzten metallischen Stranges eingestellt, der mit den leitfähigen Mänteln aller drei Kabel in gutem Kontakt steht. Unabhängig von der für den Linearmotor verwendeten Betriebsspannung werden dann Fehler- und Ausgleichsstöme sicher über den Erdleiter abgeleitet. Die Kabel und insbesondere ihre äußeren Mäntel sind so wirksam gegen Beschädigungen durch zu hohe Ströme geschützt. Das gilt auch bei großen Temperaturunterschieden, denen die Kabel im Betrieb bei Tag und Nacht und in unterschiedlichen Jahreszeiten ausgesetzt sind. Das Vliesmaterial behält seinen bei der Fertigung eingestellten Widerstandswert auch dann mit großer Genauigkeit bei.

Durch das Vliesmaterial wird außerdem die Leitfähigkeit des Schirms der Kabel so weit erhöht, daß derselbe ausreichend hohe Ströme tragen kann, um eine einfache und schnelle Erkennung eines Erdschlusses sicherzustellen. Das Vliesmaterial kann aus Graphitfasern allein oder in Kombination mit Fasern aus Kunststoff aufgebaut sein. Der Widerstandswert des Schirms bleibt bei Einsatz des Vliesmaterials so hoch, daß keine zu hohen Verlusten führenden, niederohmigen Sekundärkreise entstehen. Verluste durch Spannungen und Ströme, die im Schirm der Kabel induziert werden, sind gegenüber anderen Leitungsverlusten vernachlässigbar.

Das Vliesmaterial der Zwischenschicht verbindet sich beim Extrudieren des Mantels eines Kabels relativ fest mit demselben. Dadurch ergibt sich als zusätzlicher Vorteil eine vereinfachte Montage, wenn die über der äußeren Leitschicht liegenden Schichten des Kabels für Anschlußzwecke entfernt werden müssen.

Ausführungsbeispiele des Erfindungsgegenstandes sind in den Zeichnungen dargestellt.

Es zeigen:
Fig. 1 ein zu einem mäanderförmigen Wicklungsstrang gebogenes Kabel als Teil einer Wicklung nach der Erfindung.
Fig. 2 das Kabel selbst mit abschnittsweise sichtbaren Schichten seines Aufbaues.
Fig. 3 bis 8 unterschiedliche Anordnungen eines im Kabelaufbau vorhandenen Vliesmaterials als Zwischenschicht.

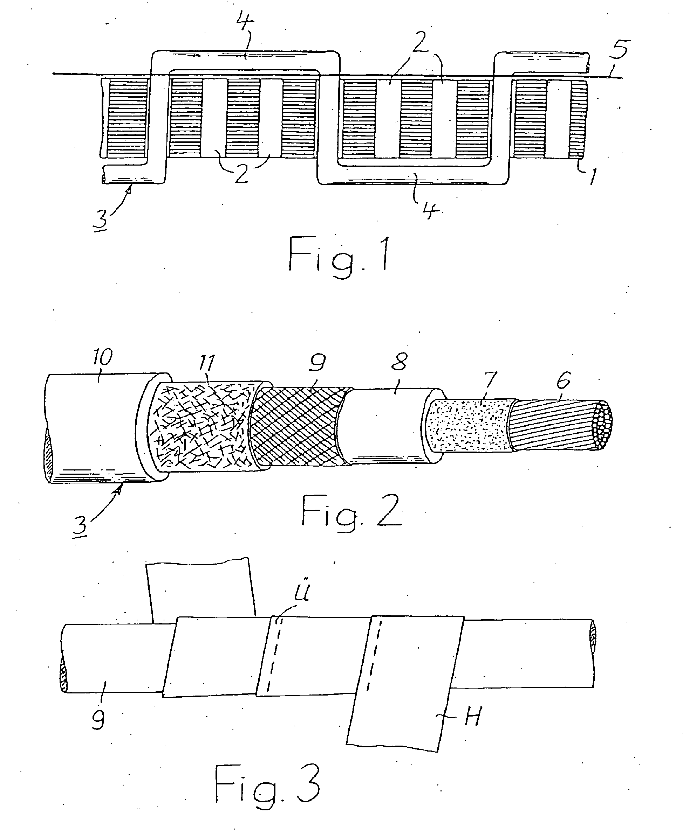

Mit 1 ist der Induktor eines Linearmotors bezeichnet, der zusammen mit einer dreiphasigen Wicklung den Stator desselben bildet. Der Induktor 1 besteht aus Blechpaketen, in denen Nuten 2 zur Aufnahme von Wicklungssträngen der Wicklung angebracht sind. Der Stator ist langgestreckt. Er kann viele Kilometer lang sein. Die Wicklungsstränge bestehen im vorliegenden Fall aus elektrischen Kabeln, deren genauerer Aufbau beispielsweise aus Fig. 2 hervorgeht.

In Fig. 1 ist nur ein Kabel 3 eingezeichnet, das mit mäanderförmigem Verlauf in den Nuten 2 des Induktors 1 befestigt ist. Die nicht belegten Nuten 2 des Induktors 1 sind zur Aufnahme von zwei weiteren Kabeln mit dem gleichen Aufbau wie das Kabel 3 vorgesehen. Sie sind der Einfachheit halber nicht mit eingezeichnet. Die drei Kabel bilden zusammen die dreiphasige Wicklung des Linearmotors.

Zum Stator des Linearmotors gehört auch mindestens ein als Erdleiter dienender, metallischer Strang 5 aus elektrisch gut leitendem Material. Der Strang 5 hat elektrisch gut leitenden Kontakt mit den leitenden Mänteln 10 der drei im Stator vorhandenen Kabel. Hohe, beispielsweise durch Induktion entstehende Ströme werden in der Regel über den an Erde angeschlossenen Strang 5 abgeführt. Das ist mit den vorliegenden Kabeln in jedem Fall sichergestellt, da der Wert des elektrischen Widerstandes des als Zwischenschicht 11 (Fig. 2) eingesetzten Vliesmaterials pro Längeneinheit zumindest geringfügig höher als der entsprechende Widerstandswert des Stranges 5 ist.

Das Kabel 3 ist so aufgebaut, daß es einfach zu dem mäanderförmigen Verlauf zu verformen ist und ohne zusätzlichen Aufwand seine Form auch in den außerhalb des Induktors 1 liegenden Bereichen - den Wickelköpfen 4 - beibehält. Auf mindestens einer Seite des Induktors 1 kann über dessen ganze Länge ein als Erdleiter dienender metallischer Strang 5 aus elektrisch gut leitendem Material verlaufen, der in gutem elektrischem Kontakt mit den Kabeln steht und an Erdpotential angeschlossen werden kann.

Das Kabel 3 hat ebenso wie die beiden anderen Kabel beispielsweise folgenden Aufbau:

Der Leiter des Kabels 3 ist als Leiterseil 6 ausgebildet, das aus einer Vielzahl von Einzeldrähten gebildet ist. Es sind mindestens zwei Lagen von Einzeldrähten vorhanden.

Die Schlagrichtung der Verseilung in diesen beiden Lagen soll entgegengesetzt sein. Für den Fall, daß mehr als zwei Lagen vorhanden sind, sollen sie abwechselnd entgegengesetzte Schlagrichtung aufweisen. Das Leiterseil 6 kann aus Aluminiumdrähten bestehen. Es könnten aber auch Kupferdrähte oder Drähte aus einem Aluminium-Kupfer-Verbund verwendet werden.

Das Leiterseil 6 ist von einer inneren Leitschicht 7 umgeben, die auf dasselbe aufextrudiert sein kann. Der Extrusionsvorgang ist dabei so abgestimmt, daß das Material der Leitschicht 7 auch in die Zwickel eindringt, welche zwischen den Einzeldrähten der äußeren Lage des Leiterseils 6 vorhanden sind. Die Leitschicht 7 wird dadurch fest mit dem Leiterseil 6 verbunden, da sie sich an demselben verankert. Der Festsitz ist so gut, daß die Leitschicht 7 weder durch Biegung noch durch axiale Beanspruchung vom Leiterseil 6 gelöst wird. Für die innere Leitschicht 7 kann vorzugsweise ein auf der Basis von EPDM (Ethylen-Propylen-Dien-Monomer) aufgebautes Material verwendet werden. Das ist ein Material auf der Basis eines Copolymers von Ethylen und Propylen. Dem Basismaterial werden hochaktive Leitruße hinzugegeben. Das kann ein Leitruß allein sein. Es können auch mehrere Leitruße im Verschnitt eingesetzt werden.

Über der inneren Leitschicht 7 ist eine Isolierung 8 angeordnet, die im gleichen Arbeitsgang ebenfalls durch Extrusion aufgebracht werden kann. Die Isolierung 8 besteht beispielsweise aus einer Mischung auf der Basis von EPR (Ethylen-Propylen-Rubber). Ebenfalls im gleichen Arbeitsgang kann eine äußere Leitschicht 9 auf die Isolierung 8 aufextrudiert werden, für die das gleiche Material wie für die innere Leitschicht 7 verwendet werden kann. Durch die Verankerung der inneren Leitschicht 7 am Leiterseil 6 ergibt sich für die drei fest miteinander verbundenen Schichten 7, 8 und 9 insgesamt ein so guter Festsitz auf dem Leiterseil 6, daß diese Schichten auch bei der Montage von Garnituren an den Kabeln unverrückbar sind.

Das Kabel 3 hat einen äußeren Mantel 10, der aus einem leitfähig gemachten Kunststoff besteht. Er wird ebenfalls durch Extrusion aufgebracht. Als Materialien für den Mantel 10 eignen sich beispielsweise Polymere auf der Basis von Acetatcopolymeren des Ethylens, die beispielsweise einen Acetatgehalt von 30 % bis 70 % haben. Diesen Polymeren werden hochleitfähige Ruße zugegeben, vorzugsweise in Kombination von mindestens zwei Rußen.

Zwischen der äußeren Leitschicht 9 und dem leitfähigen Mantel 10 ist eine elektrisch leitfähige Zwischenschicht 11 angeordnet, deren Dicke zwischen 300 µm und 600 µm und deren elektrischer Widerstand zwischen 150 Ω/m und 500 Ω/m liegt. Die Zwischenschicht 11 besteht aus einem Band H (Fig. 3 bis 8) aus einem elektrisch leitfähigen Vliesmaterial. Das Vliesmaterial kann insgesamt aus Graphitfasern, aus graphitierten Kunststofffasern oder auch aus einer Kombination solcher Fasern mit Kunststofffasern bestehen. Sein elektrischer Widerstand kann so auf den jeweils gewünschten bzw. erforderlichen Wert eingestellt werden. Das Band H kann zur Bildung der Zwischenschicht 11 entweder um die äußere Leitschicht 9 herumgewickelt oder in Längsrichtung um dieselbe herumgeformt werden, so wie es in den Fig. 3 bis 8 wiedergegeben ist:

Gemäß Fig. 3 ist das Band H so um die äußere Leitschicht 9 des Kabels 3 herumgewickelt, daß seine Kanten einander überlappen. Die Überlappung Ü kann beispielsweise zwischen 2 mm und 8 mm betragen. Das Band H selbst kann als Wickelband 10 mm bis 80 mm breit sein.

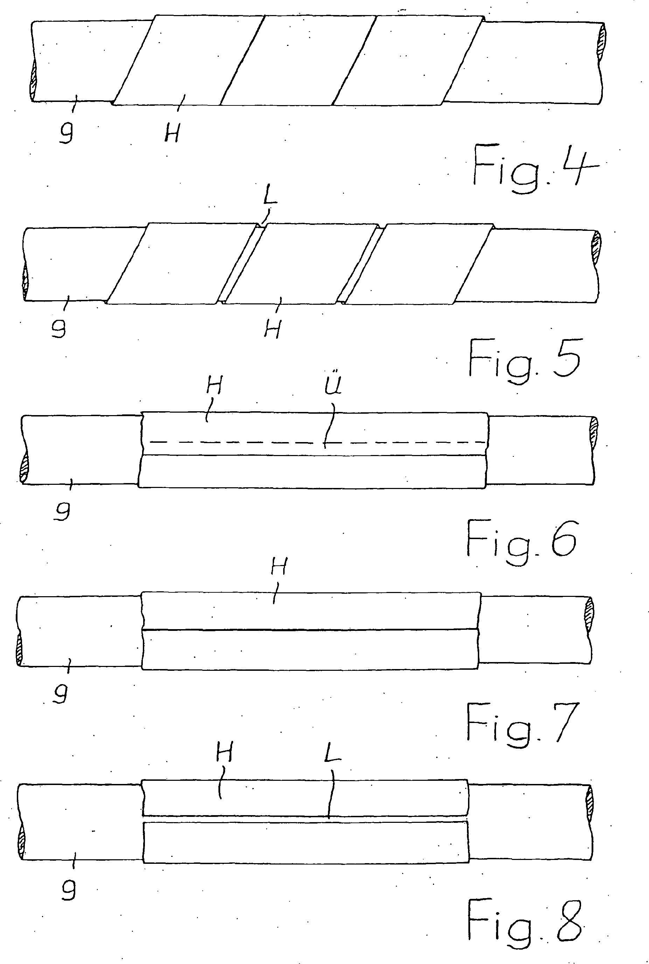

Das Band H kann gemäß Fig. 4 auch so um die äußere Leitschicht 9 herumgewickelt sein, daß seine Kanten aneinander stoßen. Es ergibt sich dann eine absatzfreie, rundum und in Längsrichtung des Kabels geschlossene Zwischenschicht 11.

Bei einer weiteren Möglichkeit zur Bildung der Zwischenschicht 11 wird das Band H gemäß Fig. 5 mit Lücke L zwischen seinen Kanten um die äußere Leitschicht 9 herumgewickelt.

Der gleiche Sachverhalt ergibt sich dann, wenn das Band H längseinlaufend um die äußere Leitschicht 9 des Kabels 3 herumgeformt ist, und zwar gemäß Fig. 6 mit überlappenden, in Längsrichtung verlaufenden Kanten (Überlappung Ü) oder gemäß Fig. 7 mit aneinander stoßenden Kanten oder gemäß Fig. 8 mit Lücke L zwischen den Kanten. Für diese Längsformung kann ein breiteres Band H mit einer Breite von 80 mm bis 150 mm eingesetzt werden. Maßgebend ist hier der Durchmesser des jeweiligen Kabels über der äußeren Leitschicht 9.

## Patentansprüche

1. Linearmotor mit einer Wicklung, bestehend aus drei in Nuten (2) eines langgestreckten Induktors (1) angeordneten elektrischen Kabeln (3), die jeweils einen elektrisch gut leitenden metallischen Leiter (6), eine denselben umgebende innere Leitschicht (7), eine über der inneren Leitschicht angeordnete Isolierung (8), eine die Isolierung umgebende äußere Leitschicht (9), eine elektrisch leitfähige Zwischenschicht (11) und einen die Zwischenschicht umgebenden Mantel (10) aus elektrisch leitfähig gemachtem Isoliermaterial aufweisen, bei welcher über die ganze Länge des aus dem Induktor (1) und den drei zu einer dreiphasigen Wicklung geschalteten Kabeln (3) bestehenden Stators mindestens ein als Erdleiter dienender metallischer Strang (5) aus elektrisch gut leitendem Material vorhanden ist, der elektrisch gut leitenden Kontakt zu den leitfähigen Mänteln (10) der Kabel (3) hat, **dadurch gekennzeichnet,**
- **daß** die Zwischenschicht (11) aus einem Vliesmaterial besteht, das zur einfachen Anpassung an unterschiedliche, für den Betrieb des Linearmotors geltende Betriebsspannungen aus Graphitfasern oder aus graphitierten Kunststofffasern oder aus einer Kombination von Graphitfasern und/oder graphitierten Kunststofffasern mit Kunststofffasern aufgebaut ist, dessen Dicke zwischen 300 µm und 600 µm beträgt und das einen elektrischen Widerstand hat, der zwischen 150 Ω/m und 500 Ω/m liegt, und
- **daß** der Wert des elektrischen Widerstandes der Zwischenschicht (11) größer als der elektrische Widerstandswert des für den Erdleiter verwendeten Stranges (5) ist.

## Claims

1. A linear motor with a winding, comprising three electrical cables (3) arranged in grooves (2) of an elongated inductor (1), wherein the three electrical cables (3) have respectively an electrically highly conductive metallic conductor (6), an inner conductive layer (7) that surrounds the conductor 6, an insulating layer (8) arranged above the inner conductive layer, an outer conductive layer (9) that surrounds the insulation, an electrically conductive intermediate layer (11) and a sheath (10) made of insulating material, which has been rendered electrically conductive, which surrounds the intermediate layer, wherein at least one metal strand (5) of an electrically highly conductive material that has electrically highly conductive contact with the conductive sheaths (10) of the cables (3) and serves as a grounding conductor is present over the whole length of the stator, said stator including the inductor (1) and the three cables (3), which are connected to form a three-phase winding, **characterized in**
- **that** the intermediate layer (11) comprises a fleece material, which for a simple adaption to different operating voltages which are used during the operation of the linear motor, is made from graphite fibers or graphitized synthetic fibers or a combination of graphite fibers and/or graphitized synthetic fibers and synthetic fibers, and which has a thickness between 300 µm and 600 µm and an electrical resistance, which lies between 150 Ω/m and 500 Ω/m, and
- **that** the value of electrical resistance of the intermediate layer (11) is greater than the corresponding resistance value of the strand (5) used as the grounding conductor.

## Revendications

1. Moteur linéaire comprenant un enroulement composé de trois câbles (3) électriques disposés dans des rainures (2) d'un inducteur (1) allongé, lesquels présentent respectivement un conducteur (6) métallique bon conducteur d'électricité, une couche conductrice interne (7) qui entoure celui-ci, un isolant (8) disposé au-dessus de la couche conductrice interne, une couche conductrice externe (9) qui entoure l'isolant, une couche intermédiaire (11) conductrice d'électricité et une gaine (10) en un matériau isolant rendu électriquement conducteur qui entoure la couche intermédiaire, avec lequel il existe, sur toute la longueur du stator composé de l'inducteur (1) et des trois câbles (3) connectés en un enroulement triphasé, au moins une barre métallique (5) faisant office de conducteur de terre en un matériau bon conducteur d'électricité, laquelle possède un contact bon conducteur d'électricité avec les gaines (10) du câble (3), **caractérisé en ce**
- **que** la couche intermédiaire (11) se compose d'un matériau non tissé qui, pour une adaptation aisée aux différentes tensions de service applicables pour le fonctionnement du moteur linéaire, est constitué de fibres de graphite ou de fibres en matière plastique graphitées ou d'une combinaison de fibres de graphite et/ou de fibres en matière plastique graphitées avec des fibres en matière plastique dont l'épaisseur est comprise entre 300 µm et 600 µm et qui possède une résistance électrique comprise entre 150 Ω/m et 500 Ω/m et
- **que** la valeur de la résistance électrique de la couche intermédiaire (11) est supérieure à la valeur de la résistance électrique de la barre (5) utilisée pour le conducteur de terre.
